# EUROPEAN PATENT SPECIFICATION

(11) **EP 3 424 578 B1**
(45) Date of publication and mention of the grant of the patent: **03.03.2021**
(21) Application number: 18182150.5
(22) Date of filing: 06.07.2018
(51) Int. Cl.: B01D 29/35, B01D 29/64

(54) **SELF-CLEANING FILTER**
SELBSTREINIGENDER FILTER
FILTRE A AUTO-NETTOYAGE

(30) Priority: 07.07.2017 IT 201700076873
(43) Date of publication of application: 09.01.2019
(73) Proprietor: Alfa Water S.r.l., 32036 Sedico (BL) (IT)
(72) Inventor: Cendron, Nicola, 32100 Belluno BL (IT)
(74) Representative: Perani & Partners S.p.A.

(56) References cited:
- EP-A1- 3 000 517
- DE-U1-202013 105 966
- US-A1- 2013 087 495
- US-A1- 2016 214 039
- US-A1- 2017 014 736

## Description

The present invention refers to a self-cleaning filter for liquids. Such filter is particular usable whenever it is necessary to remove solid particulate and/or insoluble liquid from a liquid to be filtered, usually water. Such system is normally used in water treatment or purification plants, or for filtering water for industrial, civil or naval use or for other uses.

Self-cleaning filters are known in the prior art and described for example in documents US 2009/050582, EP 2767321 and US 2014/021125.

Self-cleaning filters of the prior art comprise a liquid suction opening, a liquid delivery opening, a tubular filtering element for filtering the liquid that flows from the liquid suction opening to the liquid delivery opening and a plurality of suction nozzles arranged radially in a rotary way inside the tubular filtering element, spaced out longitudinally and provided with pads in proximity to the filtering surface of the tubular filtering element.

In document US 2014/021125, the suction pads are T-shaped and have a suction slit that extends longitudinally. Such suction pads have been shown to be unsatisfactory in terms of flow rate/suction flow distribution along the suction slit. In fact, it is maximum in the central part at the discharge opening of the pad and minimum in the end parts.

A further example of prior art filter is shown in document DE 202013105966 U1. This document shows a self-cleaning filter having rotating suction nozzles which are rotatable around a central shaft. Brushes are attached to the nozzles.

### SUMMARY OF THE INVENTION

Disadvantageously, self-cleaning filters are not able to guarantee the complete removal of dirt during the cleaning operation, as some particles of dirt are too attached to the filter itself to be able to be removed by the method described above.

In this context, the technical objective underlying the present invention is to provide a self-cleaning filter which obviates the drawbacks in the prior art as described above.

In particular, the object of the present invention is to provide a self-cleaning filter able to improve the efficiency of the cleaning operation.

The defined technical task and the specified aims are substantially achieved by a self-cleaning filter, comprising the technical features of at least claim 1.

Such device solves the technical problem as the striking performed by the contact cleaning means allows some particles of dirt to be detached from the filter by mechanical action which would otherwise remain firmly stuck to the filter itself.

### LIST OF FIGURES

Further characteristics and advantages of the present invention will become more apparent from the approximate and thus non-limiting description of a preferred, but not exclusive, embodiment of a self-cleaning filter, as illustrated in the accompanying drawings, of which:

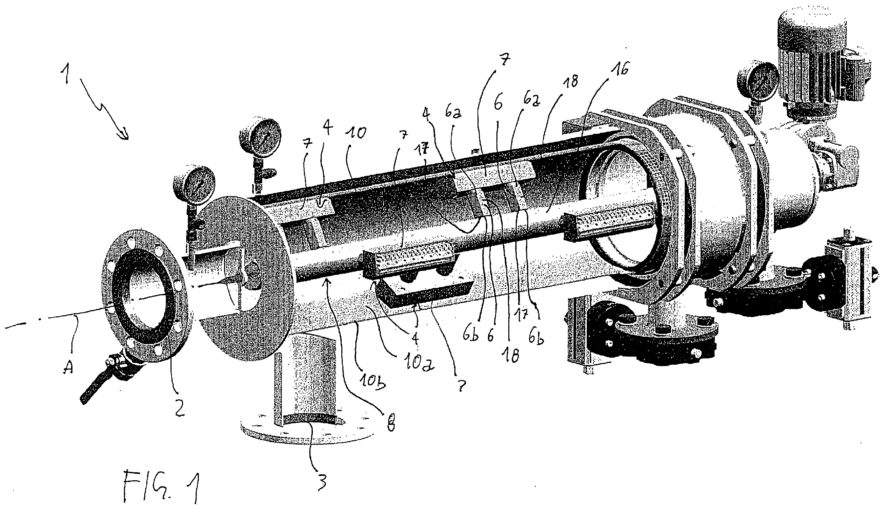

- Figure 1 shows a perspective view of the self-cleaning filter according to one embodiment of the present invention with some parts removed to better highlight others;
- Figure 2 shows a perspective view of the filter of Figure 1,
- Figure 3 shows an exploded perspective view of the detail of figure 2.

### DETAILED DESCRIPTION

With reference to the appended figures, 1 indicates a self-cleaning filter according to one embodiment of the present invention.

The self-cleaning filter 1 comprises an inlet opening 2, a delivery opening 3 and a tubular filtering element 10 configured to filter the liquid that flows from the inlet opening 2 to the delivery opening 3.

The tubular filtering element 10 extends along a longitudinal axis of development A. In the example, the tubular filtering element 10 has a circular section.

The tubular filtering element 10 has a filtering surface, in the example identified by the inner surface 10a, and an opposing outer surface 10b.

According to a preferred embodiment, the tubular filtering element 10 is identified by a filtering mesh.

The self-cleaning filter 1 comprises one or more cleaning elements 4 arranged radially in a rotating way with respect to the tubular filtering element 10 and spaced away from each other along the longitudinal direction of development "A". In particular, the cleaning elements 4 are arranged so as to rotate about an axis of rotation extending along the longitudinal direction of development "A".

In the description that follows reference will be made in a non-limiting way to the embodiment shown in the figures in which the cleaning elements 4 are arranged inside the tubular filtering element 10.

Advantageously, the cleaning elements 4 are arranged spaced angularly from each other. In particular, two cleaning elements 4 arranged adjacent along the longitudinal direction of development "A" are spaced angularly by 120°.

In detail, the filter 1 comprises a shaft 8 arranged centrally and oriented along the longitudinal direction of development "A". The cleaning elements 4 are connected to the shaft 8 which, by turning, sets them in rotation with respect to the tubular filtering element 10.

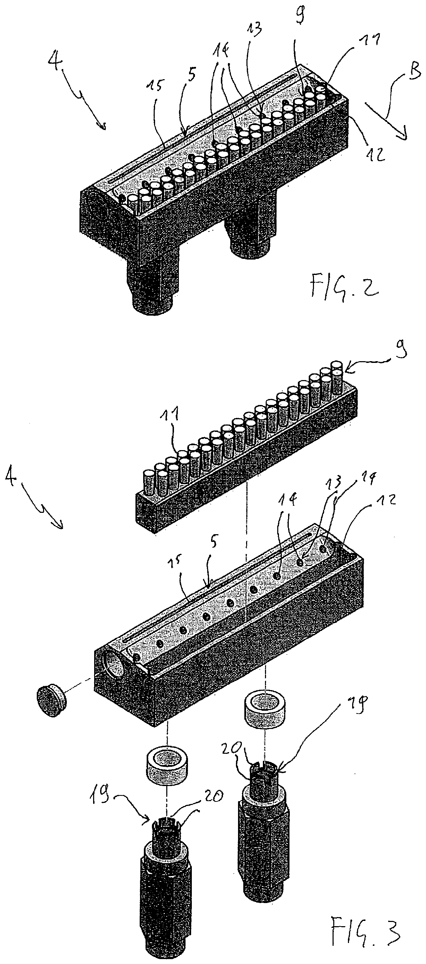

With reference to the embodiment shown, each cleaning element 4 has a direction of forward motion "B". In other words, as a result of the rotation about the longitudinal direction of development "A" of the tubular filtering element 10, each cleaning element travels along the inner surface 10a advancing along a direction of forward motion "B", as shown for example in figure 2.

In more detail, each cleaning element 4 comprises at least a first suction inlet 5. In use, the first suction inlet 5 faces the inner surface 10a of the tubular filtering element 10, in particular placed in proximity to the inner surface 10a itself. Such first suction inlet 5 has the function of sucking the filtered impurities from the inner surface 10a of the tubular filtering element 10.

In further detail, the first suction inlet 5 comprises a slit 15, preferably with a constant width, that extends along the longitudinal direction of development "A" for over 90% of the length of the cleaning element 4.

According to a first embodiment, the cleaning elements 4 are spaced along the longitudinal direction of development "A" in such a way that, following their rotation about the longitudinal direction of development "A" of the tubular filtering element 10, the surfaces brushed by the first suction inlets 5 of two adjacent cleaning elements 4 overlap with a ratio of the overlapping area to the total area of the first suction inlet 5 comprised within a range of 5% to 35%.

Each cleaning element 4 comprises in particular a pair of rods 6 and a pad 7. Each rod 6 is radially oriented radially with respect to the tubular filtering element 10. In particular, each rod 6 has a first end 6a and a second end 6b. The first end 6a is connected to the aforementioned shaft 8.

The pad 7 is connected to the second ends 6b of the rods 6 and is in particular arranged transversally with respect thereto. Such pad 7 is arranged in a proximal zone to the inner surface 10a of the tubular filtering element 10.

As shown for example in figure 3, each cleaning element 4 comprises quick connect means 19 operating between the rod 6 and the pad 7. Such quick connect means 19 has the function of connecting/disconnecting the rod 6 to/from the pad 7e, for example, they may comprise one or more teeth 20 that are snap fitted into the pad 7. Advantageously, the quick connect means 19 guarantees a stable fastening of the pad 7 onto the rod 6, useful in particular when the cleaning element 4 is extracted from the tubular filtering element 10 for performing maintenance operations.

It is to be noted that the pad 7 extends substantially parallel with respect to the longitudinal direction of development "A". The first suction inlet 5, described above, is fashioned on the pad 7.

Each cleaning element 4 can advantageously comprise at least one elastic element, in particular an elastic bellows, connected to the pad 7 and configured to push it against the inner surface 10a.

Advantageously, the pad 7 can be made of plastic material.

It is to be noted that, according to the invention, each cleaning element 4 comprises a contact cleaning means 9, arranged in particular on the pad 7. Such contact cleaning means 9 is configured for striking the inner surface 10a of the tubular filtering element 10, so as to remove dirt. In particular, the contact cleaning means 9 is placed in front of the first suction inlet 5 along the direction of forward motion "B".

In more detail, the contact cleaning means 9 comprises a plurality of brushes 11. Each brush 11 is secured to a respective cleaning element 4, and is configured for sliding in contact with the inner surface 10a of the tubular filtering element 10 along said direction of forward motion "B". Advantageously, the brush 11 allows a larger amount of dirt to be removed by mechanical action.

In more detail, each cleaning element 4 has a seat 12, in particular fashioned on the pad 7. The mentioned brush 11 is arranged inside the seat 12. In more detail, each brush 11 can be inserted in/disinserted from the seat 12 in order for it to be connected to/disconnected from its respective cleaning element 4. In more detail, a pair of pins (not illustrated) fixes the brush 11 into the seat 12. Such pins are in themselves a securing mechanism known to a person skilled in the art, and will not therefore be described further.

Advantageously, the removability of the brushes 11 allows them to be replaced when they are worn or, alternatively, to select a particular type of brush 11 that is more adapted to the particular type of tubular filtering element 10 mounted in the filter 1.

It is to be noted that the contact cleaning means 9 comprises a second suction inlet 13. Such second suction inlet 13, distinct from the first suction inlet 5, is oriented such as to be able to face the brush 11 rather than the inner surface 10a of the tubular filtering element 10. The second suction inlet 13 is in particular arranged in proximity to the seat 12. In the embodiment illustrated, the second suction inlet 13 is defined by a plurality of holes 14. Such holes 14 are aligned along a transverse direction, and in particular perpendicular to the direction of forward motion "B" of the cleaning element 4.

It is to be specified that the second suction inlet 13 is arranged between the first suction inlet 5 and the brush 11 along the direction of forward motion "B" of the cleaning element 4. Advantageously, this allows the dirt to be sucked immediately after the mechanical action of the brush 11 has separated it from the tubular filtering element 10, preventing it from resettling. In other words, the fluid dynamic action of the second suction mouth 13 is contextual to the mechanical action of the brush 11.

The self-cleaning filter 1 further comprises a suction conduit 16 arranged inside the tubular filtering element 10, in particular inside the shaft 8, and configured to rotate with respect to the tubular filtering element 10.

Preferably, the suction conduit 16 is arranged coaxially with respect to the tubular filtering element 10.

According to one embodiment, in order to enable the rotation of the cleaning elements 4 with respect to the tubular filtering element 10, the cleaning elements 4 are fixed in rotation to the suction conduit 16 and project radially from the suction conduit 16.

In particular, the suction conduit 16 has a plurality of connection openings 17 where each connection opening 17 is connected to a respective cleaning element 4 through a respective connection conduit 18. It is to be noted that the connection is defined inside at least one of the two rods 6 that form the cleaning element 4, preferably inside both rods 6.

The filter 1 cleaning system can advantageously operate according to two distinct modes. In the first mode, both the brush 11 and the suction inlets 5, 13 operate simultaneously for the entire duration of the cleaning cycle.

In particular, while the pads 7 rotate a suction valve (not shown) is open so that the dirt is sucked through the suction inlets 5, 13.

In the second operating mode, it is possible to deactivate the suction inlets 5, 13 in a first step, hence only working with the brushes 11. Thus separate evacuation means (not shown) will be activated, able to take away the dirt removed by the brushes 11. The suction inlets 5, 13 will in any case be activated in a second step of the process.

## Claims

1. A self-cleaning filter (1) comprising:
- a tubular filtering element (10) having an inner surface (10a) and a longitudinal direction of development (A);
- one or more cleaning elements (4) configured for rotating about said longitudinal direction of development (A), said cleaning elements (4) being spaced away from each other along said longitudinal direction of development (A), each cleaning element (4) having a respective direction of forward motion (B), each cleaning element (4) comprising at least a first suction inlet (5) facing said inner surface (10a) and placed in proximity to said inner surface (10a), each cleaning element (4) having a seat (12);
- contact cleaning means (9) configured for striking said inner surface (10a) to remove dirt from said inner surface (10a), said contact cleaning means (9) being placed in front of said suction inlet (5) along said direction of forward motion (B), said contact cleaning means (9) comprising a plurality of brushes (11), each secured to a respective cleaning element (4) and configured for sliding in contact with said inner surface (10a) of said tubular filtering element (10) along said direction of forward motion (B), each brush (11) being placed inside the seat (12) of a respective cleaning element (4),
**characterized in that** the contact cleaning means (9) comprises a second suction inlet (13) facing said brush (11) and preferably placed in proximity to said seat (12).

2. A self-cleaning filter (1) according to the previous claim, **characterized in that** each brush (11) can be inserted in/disinserted from the seat (12) in order for it to be connected to/disconnected from its respective cleaning element (4).

3. A self-cleaning filter (1) according to any one of the previous claims, **characterized in that** said second suction inlet (13) is arranged between the first suction inlet (5) and the brush (11) along said direction of forward motion (B).

4. A self-cleaning filter (1) according to any of the previous claims, **characterized in that** each cleaning element (4) comprises a pad (7), at least one elastic element being configured for pushing said pad (7) against said inner surface (10a).

5. A self-cleaning filter (1) according to the previous claim, **characterized in that** each cleaning element (4) comprises at least one rod (6) connected to said pad (7), each cleaning element (4) comprising quick connect means (19) operating between said rod (6) and said pad (7) to connect/disconnect said rod (6) to/from said pad (7).

## Patentansprüche

1. Selbstreinigender Filter (1), Folgendes umfassend:
- ein rohrförmiges Filterelement (10), das eine Innenfläche (10a) und eine Längserstreckungsrichtung (A) aufweist;
- ein oder mehrere Reinigungselemente (4), die so ausgebildet sind, dass sie sich um die Längserstreckungsrichtung (A) drehen, wobei die Reinigungselemente (4) entlang der Längserstreckungsrichtung (A) voneinander beabstandet sind, wobei jedes Reinigungselement (4) eine jeweilige Vorwärtsbewegungsrichtung (B) aufweist, wobei jedes Reinigungselement (4) mindestens einen ersten Saugeinlass (5) aufweist, der der Innenfläche (10a) gegenüberliegt und in der Nähe der Innenfläche (10a) angeordnet ist, wobei jedes Reinigungselement (4) einen Sitz (12) aufweist;
- ein Kontaktreinigungsmittel (9), das zum Auftreffen auf die Innenfläche (10a) ausgebildet ist, um Schmutz von der Innenfläche (10a) zu entfernen, wobei das Kontaktreinigungsmittel (9) vor dem Saugeinlass (5) entlang der Vorwärtsbewegungsrichtung (B) angeordnet ist, wobei das Kontaktreinigungsmittel (9) eine Vielzahl von Bürsten (11) umfasst, die jeweils an einem entsprechenden Reinigungselement (4) befestigt und so ausgebildet sind, dass sie in Kontakt mit der Innenfläche (10a) des rohrförmigen Filterelements (10) entlang der Vorwärtsbewegungsrichtung (B) gleiten, wobei jede Bürste (11) innerhalb des Sitzes (12) eines entsprechenden Reinigungselements (4) angeordnet ist,
**dadurch gekennzeichnet, dass** das Kontaktreinigungsmittel (9) einen zweiten Saugeinlass (13) umfasst, der der Bürste (11) gegenüberliegt und vorzugsweise in der Nähe des Sitzes (12) angeordnet ist.

2. Selbstreinigender Filter (1) gemäß dem vorhergehenden Anspruch, **dadurch gekennzeichnet, dass** jede Bürste (11) in den Sitz (12) eingesetzt/aus diesem herausgenommen werden kann, um sie mit ihrem jeweiligen Reinigungselement (4) zu verbinden/von diesem zu trennen.

3. Selbstreinigender Filter (1) gemäß einem der vorhergehenden Ansprüche, **dadurch gekennzeichnet, dass** der zweite Saugeinlass (13) zwischen dem ersten Saugeinlass (5) und der Bürste (11) entlang der Vorwärtsbewegungsrichtung (B) angeordnet ist.

4. Selbstreinigender Filter (1) gemäß einem der vorhergehenden Ansprüche, **dadurch gekennzeichnet, dass** jedes Reinigungselement (4) ein Kissen (7) umfasst, wobei mindestens ein elastisches Element ausgebildet ist, um das Kissen (7) gegen die Innenfläche (10a) zu drücken.

5. Selbstreinigender Filter (1) gemäß dem vorhergehenden Anspruch, **dadurch gekennzeichnet, dass** jedes Reinigungselement (4) mindestens eine Stange (6) umfasst, die mit dem Kissen (7) verbunden ist, wobei jedes Reinigungselement (4) Schnellverbindungsmittel (19) umfasst, die zwischen der Stange (6) und dem Kissen (7) wirken, um die Stange (6) mit dem Kissen (7) zu verbinden/von diesem zu trennen.

## Revendications

1. Filtre auto-nettoyant (1) comprenant :
- un élément de filtrage tubulaire (10) ayant une surface interne (10a) et une direction longitudinale de développement (A) ;
- un ou plusieurs éléments de nettoyage (4) configurés pour tourner autour de ladite direction longitudinale de développement (A), lesdits éléments de nettoyage (4) étant espacés les uns des autres le long de ladite direction longitudinale de développement (A), chaque élément de nettoyage (4) ayant une direction respective de mouvement vers l'avant (B), chaque élément de nettoyage (4) comprenant au moins une première bouche d'aspiration (5) faisant face à ladite surface interne (10a) et placée à proximité de ladite surface interne (10a), chaque élément de nettoyage (4) ayant un siège (12) ;
- des moyens de nettoyage par contact (9) configurés pour frapper ladite surface interne (10a) afin d'enlever la souillure de ladite surface interne (10a), lesdits moyens de nettoyage par contact (9) étant placés en face de ladite bouche d'aspiration (5) le long de ladite direction de mouvement vers l'avant (B), lesdits moyens de nettoyage par contact (9) comprenant une pluralité de brosses (11), chacune fixée à un élément de nettoyage (4) respectif et configurée pour glisser au contact avec ladite surface interne (10a) dudit élément de filtrage tubulaire (10) le long de ladite direction de mouvement vers l'avant (B), chaque brosse (11) étant placée à l'intérieur d'un siège (12) d'un élément de nettoyage (4) respectif,
**caractérisé en ce que** les moyens de nettoyage par contact (9) comprennent une deuxième bouche d'aspiration (13) faisant face à ladite brosse (11) et placée de préférence à proximité dudit siège (12).

2. Filtre auto-nettoyant (1) selon la revendication précédente, **caractérisé en ce que** chaque brosse (11) peut être insérée dans/désinsérée du siège (12) de sorte qu'elle soit connectée à/déconnectée de son élément de nettoyage (4) respectif.

3. Filtre auto-nettoyant (1) selon l'une quelconque des revendications précédentes, **caractérisé en ce que** ladite deuxième bouche d'aspiration (13) est disposée entre la première bouche d'aspiration (5) et la brosse (11) le long de ladite direction de mouvement vers l'avant (B).

4. Filtre auto-nettoyant (1) selon l'une quelconque des revendications précédentes, **caractérisé en ce que** chaque élément de nettoyage (4) comprend un patin (7), l'au moins un élément élastique étant configuré pour pousser ledit patin (7) contre ladite surface interne (10a).

5. Filtre auto-nettoyant (1) selon la revendication précédente, **caractérisé en ce que** chaque élément de nettoyage (4) comprend au moins une tige (6) connectée audit patin (7), chaque élément de nettoyage (4) comprenant des moyens de connexion rapide (19) fonctionnant entre ladite tige (6) et ledit patin (7) pour connecter/déconnecter ladite tige (6) audit/dudit patin (7).
